# EUROPEAN PATENT APPLICATION

(11) **EP 4 711 425 A2**
(43) Date of publication of application: **18.03.2026**
(21) Application number: 25201057.4
(22) Date of filing: 09.09.2025
(51) Int. Cl.: C09D 11/30, C09D 11/322, C09D 11/40, C09D 11/326

(54) **AQUEOUS-INKJET PIGMENT DISPERSION AND METHOD FOR MANUFACTURING THE SAME**

(30) Priority: 17.09.2024 JP 2024160047
(71) Applicant: Sanyo Color Works, Ltd., Himeji-shi, Hyogo 670-0966 (JP)
(72) Inventor: KURODA, Yasuhiro, Hyogo, 670-0966 (JP); EBASHI, Rikiya, Hyogo, 670-0966 (JP)
(74) Representative: Mathys & Squire

(57) **Abstract**

In an aqueous-inkjet pigment dispersion containing a colored organic pigment, a dispersant, an organic solvent, and water, the dispersant is at least one selected from a benzyl acrylate-based polymer dispersant and a styrene-maleic anhydride-based polymer dispersant having an acid value of 15 mgKOH/g or less, the organic solvent is at least one selected from monohydric aliphatic alcohols and polyhydric aliphatic alcohols, and a total amount of the organic solvent is 3 to 8% by weight in the entire aqueous-inkjet pigment dispersion.

## Description

### BACKGROUND

### 1. Technical Field

The present invention relates to an aqueous-inkjet pigment dispersion and a method for manufacturing the same, and particularly relates to an aqueous-inkjet pigment dispersion using a colored organic pigment as a pigment and a method for manufacturing the same.

### 2. Related Art

In recent years, due to improvement in image quality and printing speed, inkjet printers have come to be used not only in printing at home but also in printing in various businesses such as creation of business documents. On the other hand, for example, in printing for business and industrial applications such as the latter, further improvement in image quality, higher printing speed, and the like are required, and various studies have been made to cope with these (for example, Patent Literatures (PTLs) 1 to 3).

PTL 1 (Japanese Unexamined Patent Application Publication No. 2018-150514) suggests that a specific urethane resin is used in an aqueous inkjet ink containing a pigment and a urethane resin, and that the dynamic surface tension of the aqueous ink is in a predetermined range, in order to record an image having excellent character quality, and also to record an image having durability such as marker resistance with which the image will not get dirty even when being traced with a marker pen.

As the properties required for a coloring composition (ink) become more advanced, the dispersibility of a colorant is not sufficient with a conventional dispersant. In addition, if an amount of the dispersant used is increased, heat resistance becomes an issue, such as a change in hue due to heating during or after ink ejection. In view of the situation, PTL 2 (Japanese Unexamined Patent Application Publication No. 2021-98835) suggests a polymerization product containing specific block copolymers in a predetermined range and a coloring composition containing the polymerization product, in order to provide a dispersant having excellent dispersibility even in a small amount.

PTL 3 (Japanese Unexamined Patent Application Publication No. 2022-156109) suggests that resin particles contained in the inkjet recording aqueous ink are composed of a predetermined polymer, and the storage elastic modulus of a dried and solidified ink film at 25° C is in a predetermined range in order to provide an inkjet recording aqueous ink that improves the rubbing resistance at recording on coated paper.

### SUMMARY

In an aqueous-inkjet pigment dispersion containing a colored organic pigment, a dispersant, an organic solvent, and water according to an embodiment of the present disclosure, the dispersant is at least one selected from a benzyl acrylate-based polymer dispersant and a styrene-maleic anhydride-based polymer dispersant having an acid value of 15 mgKOH/g or less, the organic solvent is at least one selected from monohydric aliphatic alcohols and polyhydric aliphatic alcohols, and a total amount of the organic solvent is 3 to 8% by weight in the entire aqueous-inkjet pigment dispersion.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details.

The market's demand for high image quality and high printing speed in inkjet printing may be satisfied by the above-described conventional technique. However, the study of the present inventors has revealed that some of these conventional techniques exhibit poor filter filterability. For example, filtration pressure should be increased in a filter filtration step usually performed at the final stage of manufacturing the inkjet ink, or frequent replacement of the filter is required due to easy clogging in the filter. Thus, the power consumption may increase, the number of filters used, the number of steps of replacing the filter, an amount of ink loss, and the like may increase.

In view of the above, an object of the present invention is to provide a pigment dispersion capable of manufacturing an aqueous inkjet ink having good filter filterability, and a method for manufacturing the pigment dispersion.

The present inventors have conducted intensive studies for solving the above-described problems. As a result, the present inventors have found that a pigment dispersion usable for manufacturing an aqueous inkjet ink having good filter filterability can be obtained by adopting a specific dispersant and organic solvent and setting a total amount of the organic solvent to a predetermined range in the aqueous-inkjet pigment dispersion using a colored organic pigment as a pigment. The gist of the present invention is as follows.

A first aspect of the present invention relates to an aqueous-inkjet pigment dispersion containing a colored organic pigment, a dispersant, an organic solvent, and water, in which the dispersant is at least one selected from a benzyl acrylate-based polymer dispersant and a styrene-maleic anhydride-based polymer dispersant having an acid value of 15 mgKOH/g or less, the organic solvent is at least one selected from monohydric aliphatic alcohols and polyhydric aliphatic alcohols, and a total amount of the organic solvent is 3 to 8% by weight in the entire aqueous-inkjet pigment dispersion.

In the first aspect of the present invention, the aliphatic alcohol may have a chain structure having 4 to 10 carbon atoms.

In the first aspect of the present invention, a surface tension adjusting agent may be contained.

A second aspect of the present invention relates to a method for manufacturing the aqueous-inkjet pigment dispersion, the method including: obtaining a mixed liquid containing a colored organic pigment, a dispersant, an organic solvent, and water, the mixed liquid being adjusted so that a content of the organic solvent in a total amount of the mixed liquid is 3 to 8% by weight, and dispersing the mixed liquid.

A third aspect of the present invention relates to an aqueous inkjet ink containing the aqueous-inkjet pigment dispersion.

In the third aspect of the present invention, the filtration amount, when the aqueous inkjet ink having a pigment concentration of 4% by weight is filtered through a filtration membrane having a mesh size of 1.2 µm, may be 400 g/3 minutes or more.

According to the present invention, it is possible to provide a pigment dispersion usable for manufacturing an aqueous inkjet ink having good filter filterability, and a method for manufacturing the pigment dispersion.

### (Aqueous-inkjet pigment dispersion)

An aqueous-inkjet pigment dispersion according to an embodiment of the present invention (hereinafter may be simply referred to as a "pigment dispersion") contains a colored organic pigment (hereinafter may be simply referred to as an "organic pigment" or a "pigment"), a dispersant, an organic solvent, and water. The dispersant is at least one selected from a benzyl acrylate-based polymer dispersant and a styrene-maleic anhydride-based polymer dispersant having an acid value of 15 mgKOH/g or less. The organic solvent is at least one selected from monohydric aliphatic alcohols and polyhydric aliphatic alcohols. The total amount of the organic solvent is 3 to 8% by weight in the entire aqueous-inkjet pigment dispersion.

As described above, a pigment dispersion obtained by combining a specific dispersant and organic solvent to a colored organic pigment, setting a total amount of the organic pigment to a predetermined range, and performing dispersion treatment exhibits excellent filter filterability at production of an aqueous inkjet ink. The filter filterability of the aqueous inkjet ink can be evaluated with filter filterability using a pigment dispersion as an index, and the filter filterability using a pigment dispersion can be evaluated by a method described in the section of Examples described later.

Hereinafter, components of the pigment dispersion will be described.

The colored organic pigment is not particularly limited as long as it is an organic pigment other than black or white. Examples of the pigment include anthraquinone-based pigments, aminoanthraquinone-based pigments, quinacridone-based pigments, quinacridonequinone-based pigments, diketopyrrolopyrrole-based pigments, perylene-based pigments, perinone-based pigments, anthantrone-based pigments, benzimidazolone-based pigments, disazo condensate-based pigments, azo-based pigments, thioindigo-based pigments, pyrantrone-based pigments, dioxazine-based pigments, quinophthalone-based pigments, isoindoline-based pigments, and phthalocyanine-based pigments.

In addition, examples of applicable colored organic pigments indicated by color index (C.I.) numbers include the following.

Examples of a red pigment include C. I. Pigment Red (PR) 1, 2, 3, 4, 5, 6, 7, 8, 9, 10, 11, 12, 14, 15, 16, 17, 18, 21, 22, 23, 31, 32, 38, 41, 48, 48:1, 48:2, 48:3, 48:4, 48:5, 49, 52, 52:1, 52:2, 53:1, 54, 57:1, 58, 60:1, 63, 64: 1, 68, 81:1, 83, 88, 89, 95, 112, 114, 119, 122, 123, 129, 136, 144, 146, 147, 149, 150, 164, 166, 168, 169, 170, 171, 172, 175, 176, 177, 178, 179, 181, 183, 184, 185, 187, 188, 190, 193, 194, 200, 202, 206, 207, 208, 209, 210, 211, 213, 214, 216, 220, 221, 224, 226, 237, 238, 239, 242, 245, 247, 248, 251, 253, 254, 255, 256, 257, 258, 260, 262, 263, 264, 266, 268, 269, 270, 271, 272, 279, and 291.

Examples of a blue pigment include C. I. Pigment Blue (PB) 1, 15, 15:1, 15:2, 15:3, 15:4, 15:5, 15:6, 16, 17:1, 24, 24:1, 25, 26, 56, 60, 61, 62, 63, 75, 79, and 80.

Examples of a yellow pigment include C. I. Pigment Yellow (PY) 74, 138, 139, 150, 155, 180, and 185.

Examples of an orange pigment include C. I. Pigment Orange (PO) 43, 71, and 73.

Examples of a green pigment include C. I. Pigment Green (PG) 1, 4, 7, 8, 10, 36, 58, 59, and 63.

Examples of a violet pigment include C. I. Pigment Violet (PV) 1, 2, 3, 3:1, 3:3, 5:1, 13, 17, 19, 23, 25, 27, 29, 31, 32, 36, 37, 38, 42, and 50.

As the colored organic pigment, the above-described pigments can be used singly or in combination of two or more kinds thereof. The content of the pigment is preferably 15.0 to 30.0% by weight, more preferably 15.0 to 28.0% by weight in the pigment dispersion from the viewpoint of ensuring good dispersibility.

The average particle size of the colored organic pigment is, for example, the normal size in the application of inkjet ink for recording, and is usually 50 to 200 nm. The average particle size can be measured by a general method such as a dynamic light scattering method or a laser diffraction method.

The dispersant is merely required to be at least one selected from a benzyl acrylate-based polymer dispersant and a styrene-maleic anhydride-based polymer dispersant having an acid value of 15 mgKOH/g or less, as described above.

The benzyl acrylate-based polymer dispersant is merely required to contain a benzyl acrylate-based copolymer as an active ingredient. The benzyl acrylate-based copolymer is merely required to be a copolymer composed of a constituent unit derived from benzyl acrylate and a constituent unit derived from a monomer polymerizable with benzyl acrylate. The copolymer may be a random copolymer or a block copolymer, but is preferably a block copolymer from a viewpoint of further improvement in filter filterability. The block copolymer preferably contains a hydrophilic block (hereinafter may be referred to as a "block A") and a hydrophobic block (hereinafter may be referred to as a "block B"). Here, the hydrophilic block means a block having a relatively higher affinity for water than the hydrophobic block. For example, the copolymer is configured in a manner that the hydrophilic block contains a hydrophilic monomer to be described later, and the hydrophobic block does not contain the hydrophilic monomer or contains the hydrophilic monomer so that the proportion of hydrophilic functional groups contained in the hydrophobic block is smaller than that of the hydrophilic block. It is preferable that the hydrophobic block does not contain the hydrophilic monomer.

Examples of the monomer polymerizable with benzyl acrylate include the hydrophilic monomer as described above and monomers other than the hydrophilic monomer (hereinafter may be referred to as a "hydrophobic monomer").

Examples of the hydrophilic monomer include monomers containing a carboxyl group or an acid anhydride group, such as (meth)acrylic acid, unsaturated polycarboxylic acids including maleic acid, and maleic anhydride; monomers containing a sulfonic acid group such as styrenesulfonic acid and 4-(methacryloyloxy)butylsulfonic acid; and ethylene oxide-modified (meth)acrylic acid ester monomers such as ethylene oxide-modified (meth)acrylic acid alkyl esters. Among them, (meth)acrylic acid and unsaturated polycarboxylic acids such as maleic anhydride are preferable, and (meth)acrylic acid is more preferable. The hydrophilic monomer may be used alone or in combination of two or more kinds of them. In the case of combining two or more types, each of the structures of the blocks A and B may be a random polymer or a block polymer. Furthermore, the (meth)acrylic acid means methacrylic acid and/or acrylic acid.

Examples of the hydrophobic monomer include styrene-based monomers such as styrene, α-methylstyrene, and vinyltoluene; α-olefinic monomers such as ethylene, propylene, and 1-butene; and vinyl-based monomers having a phenyl group, a biphenyl group, a naphthyl group, and the like. The hydrophobic monomer may be used alone or in combination of two or more kinds thereof. In the case of combining two or more types, each of the structures of the blocks A and B may be a random polymer or a block polymer. Furthermore, benzyl acrylate corresponds to a hydrophobic monomer.

The structure of the benzyl acrylate-based copolymer is preferably composed of a block A composed of a constituent unit derived from benzyl acrylate and the hydrophilic monomer, and a block B composed of a constituent unit derived from the hydrophobic monomer, more preferably composed of a block A composed of a constituent unit derived from benzyl acrylate and a hydrophilic monomer, and a block B composed of a constituent unit derived from one or more hydrophobic monomers containing benzyl acrylate, further preferably composed of a block A composed of a constituent unit derived from benzyl acrylate and (meth)acrylic acid, and a block B composed of a constituent unit derived from benzyl acrylate, and particularly preferably composed of a block A composed of a constituent unit derived from benzyl acrylate, methacrylic acid, and acrylic acid, and a block B composed of a constituent unit derived from benzyl acrylate.

A content ratio (weight ratio A/B) of the block A and the block B can be appropriately determined according to the type and content of the components, but is preferably 30/70 to 70/30. When the block A is composed of a constituent unit derived from benzyl acrylate (X) and (meth)acrylic acid (Y), the content ratio (weight ratio X/Y) in the block A is preferably 1/1 to 3/1. Furthermore, when the (meth)acrylic acid is acrylic acid (Y1) and methacrylic acid (Y2), the content ratio (weight ratio Y1/Y2) in the block A is preferably 200/1 to 100/1.

Peak top molecular weight of the benzyl acrylate-based copolymer is not particularly limited, but is preferably 5,000 to 20,000, and more preferably 6,000 to 15,000 from the viewpoint of further improvement in filter filterability. The peak top molecular weight of the benzyl acrylate-based copolymer can be measured by gel permeation chromatography (GPC). An acid value of the benzyl acrylate-based copolymer is not particularly limited, but is preferably 100 to 200 mgKOH/g from the viewpoint of further improvement in filter filterability. The acid value (acid value in terms of solid content) can be determined, for example, by a method in accordance with DIN EN ISO 2114.

An amine value of the benzyl acrylate-based copolymer is not particularly limited, but is preferably 10 mgKOH/g or less, and particularly preferably 0 mgKOH/g. The amine value (amine value in terms of solid content) can be determined, for example, by a method in accordance with DIN 16945.

A method for synthesizing the block copolymer composed of the block A and the block B is not particularly limited, but for example, the block copolymer can be obtained by subjecting the monomer of the block A to living polymerization to obtain a polymer, and then subjecting the obtained polymer and the monomer of the block B to living polymerization. Polymerization is not limited to the living polymerization, and may be radical polymerization.

When the benzyl acrylate-based copolymer contains the block A, it is preferable that the polymer is isolated, and then the polymer, a base such as sodium hydroxide, and pure water are mixed to obtain a polymer solution having a pH of 7.5 to 10.0. This polymer solution can be used as a dispersant.

The styrene-maleic anhydride-based polymer dispersant is merely required to be one containing a styrene-maleic anhydride-based copolymer as an active ingredient and having an acid value of 15 mgKOH/g or less, but 5 to 12 mgKOH/g is preferable. The styrene-maleic anhydride-based copolymer preferably has an amine value. The amine value is not particularly limited, but is preferably 10 to 50 mgKOH/g.

The content of the dispersant is not particularly limited, but is preferably 20 to 80 parts by weight, more preferably 25 to 70 parts by weight, and still more preferably 30 to 70 parts by weight on a solid content basis with respect to 100 parts by weight of the colored organic pigment.

The organic solvent is merely required to be at least one selected from monohydric aliphatic alcohols and polyhydric aliphatic alcohols.

The monohydric aliphatic alcohol is an organic compound having a structure in which one hydrogen atom of an aliphatic hydrocarbon is substituted with a hydroxyl group. The structure of the aliphatic alcohol may be chain or cyclic. In the case of chain, the structure may be linear or may have a branched chain. In addition, it may be saturated or unsaturated, but is preferably saturated. The position of the hydroxyl group is not particularly limited, and the aliphatic alcohol may be any of primary to tertiary alcohols. The number of carbon atoms is not particularly limited, but is preferably 4 to 10.

Examples of the monohydric aliphatic alcohol include butanols such as 1-butanol, 2-butanol, 2-methyl-1-propanol, 2-methyl-2-propanol, and cyclobutanol; pentanols such as 1-pentanol, 2-pentanol, 3-pentanol, 2-methyl-1-butanol, 2-methyl-2-butanol, 3-methyl-2-butanol, 2,2-dimethyl-1-propanol, and cyclopentanol; hexanols such as 1-hexanol, 2-hexanol, 3-hexanol, 2-methyl-1-pentanol, 3-methyl-1-pentanol, 4-methyl-1-pentanol, 2-methyl-2-pentanol, 3-methyl-2-pentanol, 4-methyl-2-pentanol, 2-methyl-3-pentanol, 3-methyl-3-pentanol, 2,2-dimethyl-1-butanol, 2,3-dimethyl-1-butanol, 3,3-dimethyl-1-butanol, 2,3-dimethyl-2-butanol, 3,3-dimethyl-2-butanol, 2-ethyl-1-butanol, and cyclohexanol; heptanols such as 1-heptanol, 2-heptanol, 3-heptanol, 4-heptanol, 2-methyl-1-hexanol, and cycloheptanol; octanols such as 1-octanol, 2-octanol, 3-octanol, 2-methyl-1-heptanol, 2-ethyl-1-hexanol, and cyclooctanol; nonanols such as 1-nonanol, 2-nonanol, 3-nonanol, 2-methyl-1-octanol, 3-methyl-3-octanol, and cyclononanol; and decanols such as 1-decanol, 2-decanol, 3-decanol, 2-methyl-1-nonanol, 3-methyl-3-nonanol, and cyclodecanol.

The monohydric aliphatic alcohol is preferably 1-hexanol or cyclohexanol.

The polyhydric aliphatic alcohol is an organic compound having a structure in which two or more hydrogen atoms of an aliphatic hydrocarbon is substituted with hydroxyl groups. The structure of the aliphatic alcohol may be chain or cyclic, but a chain structure is preferable. In the case of chain, the structure may be linear or may have a branched chain. In addition, it may be saturated or unsaturated, but is preferably saturated. The position of the hydroxyl group is not particularly limited, but it is preferable that the hydroxyl groups are close to each other. In the case of a chain structure, it is more preferable that the hydroxyl groups are close to each other in the vicinity of the terminal. The number of carbon atoms is not particularly limited, but is preferably 4 to 10. The valence is not particularly limited, but is preferably divalent.

Examples of the polyhydric aliphatic alcohol include butanediols such as 1,2-butanediol, 1,3-butanediol, 1,4-butanediol, 2,3-butanediol, 2-methyl-1,3-propanediol, and 1,2-cyclobutanediol; pentanediols such as 1,2-pentanediol, 1,5-pentanediol, 2-methyl-1,3-butanediol, 1,2-cyclopentanediol, and 1,3-cyclopentanediol; hexanediols such as 1,2 hexanediol, 1,5 hexanediol, 3-methyl-1,5-pentanediol, 2-methyl-2,4 pentanediol, 1,2-cyclohexanediol, and 1,3-cyclohexanediol; heptanediols such as 1,2-heptanediol, 1,7-heptanediol, and 1,2-cycloheptanediol; octanediols such as 1,2-octanediol, 1,8-octanediol, 2-ethyl-1,3-hexanediol, 2,2,4-trimethyl-1,3-pentanediol, 2,2-dimethyl-1,3-propanediol, 1,2-cyclooctanediol, and 1,5-cyclooctanediol; nonanediols such as 1,2-nonanediol, 1,9-nonanediol, and 2-butyl-2 ethyl-1,3-propanediol; decanediols such as 1,2-decanediol, 1,10-decanediol, and (1R,2R)-cyclodecane-1,2-diol; tetritols such as erythritol and threitol; pentitols such as xylitol; and hexitols such as mannitol.

As the polyhydric aliphatic alcohol, 1,2-hexanediol and 1,2-octanediol are preferable.

Regarding a content of the organic solvent, a total amount of the organic solvent is 3 to 8% by weight in the entire pigment dispersion. The content is preferably 2 to 5% by weight. The content in the pigment dispersion is set within such a range, thereby obtaining an effect of the organic solvent in the manufacturing method to be described later. Thus, an effect of improving the filter filterability of the aqueous inkjet ink prepared from the pigment dispersion tends to be easily obtained.

The water is not particularly limited, but water from which impurities have been removed is preferable. Examples of such water include pure water such as ion-exchanged water, distilled water, and RO water (purified water by a reverse osmosis membrane). A content of water can be appropriately determined, and can be, for example, 50.0 to 80.0% by weight in the entire pigment dispersion. Furthermore, when water is contained in the dispersant or other components to be described later, such water is also contained in the entire pigment dispersion.

The pigment dispersion may contain a surface tension adjusting agent from the viewpoint of further improving the filter filterability of the aqueous inkjet ink. Examples of the surface tension adjusting agent include nonionic surface tension adjusting agents such as acetylene glycols and alcohol alkoxylates. Examples of the acetylene glycols include alkylene oxide-unmodified acetylene glycols and alkylene oxide-modified acetylene glycols.

Specific examples of the surface tension adjusting agent include Surfynol 82, 465, 485, and 2502, Olfine E1010, E1020, PD-002W, PD-004, EXP4001, EXP4002, EXP4123, EXP4300, and the like manufactured by Nissin Chemical Industry Co., Ltd., Acetylenol E00, E103T, E40, E60, E100, E200, and the like manufactured by Kawaken Fine Chemicals Co., Ltd., and BYK-DYNWET 800 and the like manufactured by BYK Japan KK.

The content of the surface tension adjusting agent can be appropriately determined, and can be, for example, 0.1 to 2.0% by weight in the entire pigment dispersion.

In addition to the above-described components, other components can be added to the pigment dispersion as necessary. Examples of such components include a pH adjusting agent, a pigment derivative, an antioxidant, an aggregation inhibitor, and an antifoaming agent. Examples of the pH adjusting agent include an aqueous solution containing a base such as sodium hydroxide.

The pigment dispersion having the component composition as described above has a normal viscosity applicable to an aqueous inkjet ink. This viscosity can be measured, for example, by a method described in the section of Examples described later. In the pigment dispersion, a large number of particles pass through a filter, in the filter filterability test to be described later, for example. Accordingly, excellent good filter filterability can be imparted to the inkjet ink. In the filter filtration step generally carried out at the final stage of the manufacturing step of the ink for inkjet, excellent filterability can be achieved, thereby decreasing/reducing pressure upon the filtration, a use amount and the number of replacements of the filter, loss of the ink, and the like. Therefore, the labor for the filtration treatment can be saved, and the inkjet ink can be provided in consideration of the environment, at low cost.

### (Method for Manufacturing Aqueous-inkjet pigment dispersion)

The pigment dispersion described above can be manufactured, for example, as follows.

First, a mixed liquid containing the colored organic pigment, the dispersant, the organic solvent, and water (other components as necessary) is prepared, and the content of the organic solvent in the entire mixed liquid is adjusted to 3 to 8% by weight. When the content of the organic solvent is within such a predetermined range in the dispersion step to be described later, the organic solvent increases the pigment's affinity for water, and assists the adsorption of the pigment and the dispersant. Furthermore, the filterability of the pigment through the filter is improved regardless of the average particle size after the dispersion treatment, and the filter filterability of the finally obtained aqueous inkjet ink is improved. It is presumed that when the content of the organic solvent is more than 8% by weight, the dispersant adsorbed to the pigment starts to leave from the pigment. As a result, although the mechanism is not necessarily clear, it is considered that the filterability of the aqueous inkjet ink prepared from the obtained pigment dispersion is deteriorated due to, for example, hindering the crushing of pigment aggregation during dispersion or generating aggregation after dispersion.

As described above, the usable organic solvent is merely required to contain one or more selected from monohydric aliphatic alcohols and polyhydric aliphatic alcohols. From a viewpoint of the filter filterability of the inkjet ink obtained using the pigment dispersion, the usable organic solvent is preferably one or more selected from polyhydric aliphatic alcohols.

Next, a step of dispersing a mixed liquid 1 in which a concentration of the organic solvent is adjusted as described above is performed (dispersion step). The dispersion treatment can be performed in accordance with a conventional method using a general distribution treatment apparatus. Examples of the dispersion treatment apparatus include a bead mill, a sand mill, an attritor, a disper, a paint conditioner, and a kneader. When the dispersion medium (medium) is used, its type is not particularly limited, and glass beads, zirconia beads, alumina beads, stainless steel beads, and the like can be used. A size of the medium is not particularly limited, and can be appropriately selected according to various conditions, and for example, a medium having φ 1.00 mm or less can be used. Furthermore, if necessary, the dispersion treatment may be performed so that the size of the medium is reduced in stages. In addition, when the dispersion treatment is performed as described above, a preliminary dispersion treatment performed with a load smaller than a load at the time of the dispersion treatment may be performed after preparing mixed liquid. When the preliminary dispersion treatment is performed, a concentration of the organic solvent in the mixed liquid may or may not be adjusted to fall within the predetermined range described above.

After the dispersion treatment step, a step of adding water and stirring the mixture may be performed as necessary in order to adjust the pigment concentration and the like (adjustment step). At this time, since the colored organic pigment is uniformly dispersed by the dispersion treatment, a simple stirring operation may be performed. The stirring may be performed using the above-described dispersion treatment apparatus. Thereafter, when the dispersion treatment is performed using a medium, the medium is removed, and a desired pigment dispersion can be obtained. The removal of the medium may be performed before the adjustment step. Here, the removal is preferably performed after the adjustment step from a viewpoint of accuracy of the adjustment of the concentration, and the like.

### (Aqueous Inkjet Ink)

The aqueous inkjet ink according to the embodiment of the present invention includes the above-described aqueous-inkjet pigment dispersion. That is, the aqueous inkjet ink may contain the above-described colored organic pigment, dispersant, organic solvent, and water constituting the pigment dispersion, and other components added as necessary in the pigment dispersion. Further, the aqueous inkjet ink may further contain an organic solvent (hereinafter referred to as an organic solvent for ink) which is generally used in the inkjet ink, and may contain a surfactant and other additives. A concentration of the colored organic pigment in the aqueous inkjet ink can be, for example, 1.0 to 10.0% by weight, and preferably 3.0 to 7.0% by weight in the aqueous inkjet ink. The blending of the pigment dispersion, the organic solvent for ink, and the like is adjusted so that the colored organic pigment concentration falls within this range.

As the organic solvent for ink, general organic solvents used for ink can be used, in addition to the above-described predetermined monohydric or polyhydric aliphatic alcohols. Examples of such an organic solvent for ink include water-soluble organic solvents, and for example, those described in PTLs 1 to 3 and the like can be adopted. Specific examples of the water-soluble organic solvents include monohydric alcohols; polyhydric alcohols such as glycols, diol other than glycols, and glycerin; glycol ethers such as alkylene glycol monoalkyl ethers; ketones such as acetonylacetone; esters such as γ-butyrolactone, diacetin, and triethyl phosphate; lower alkoxyalcohols such as 2-methoxyethanol and 2-ethoxyethanol; amines such as ethanolamine, diethanolamine, triethanolamine, N-methyldiethanolamine, N-ethyldiethanolamine, triethylenetetramine, tetraethylenepentamine, and pentamethyldiethylenetriamine; amides such as formamide, N,N-dimethylformamide, N-methylformamide, and N,N-dimethylacetamide; heterocyclic compounds such as 2-pyrrolidone, N-ethylpyrrolidone, N-methyl-2-pyrrolidone, cyclohexylpyrrolidone, morpholine, N-ethylmorpholine, 2-oxazolidone, 1,3-dimethyl-2-imidazolidinone, imidazole, methylimidazole, hydroxyimidazole, dimethylaminopyridine, 1,3-propanesultone, hydroxyethylpiperazine, and piperazine; sulfoxides such as dimethyl sulfoxide; and sulfones such as sulfolane. These may be used alone or in combination of two or more of them.

A content of the organic solvent for ink in the aqueous inkjet ink can be appropriately determined in consideration of the concentration of the pigment and the like. For example, a total amount of the organic solvent for ink and the predetermined organic solvent contained in the pigment dispersion can be 10.0 to 30.0% by weight in the aqueous inkjet ink.

The surfactant is not particularly limited, and its examples include anionic surfactants, cationic surfactants, amphoteric surfactants, nonionic surfactants, silicone-based surfactants, and fluorine-based surfactants. Specific examples of them include those described in PTL 2. A content of the surfactant can be, for example, 0.01 to 5.0% by weight in the entire aqueous inkjet ink.

Examples of other additives include an antioxidant, an aggregation inhibitor, a surface conditioner (leveling agent), an antiseptic, a pH adjuster, a rust inhibitor, and an antifoaming agent.

The aqueous inkjet ink can be obtained by mixing the pigment dispersion described above, an organic solvent for ink, and if necessary, a surfactant and other additives, stirring the mixture to be uniform, and then filtering the mixture through a filter in order to remove particles having a certain size or more that can be contained in the ink. A mesh size (pore diameter) and material of the filter can be appropriately determined according to the application and the like.

The aqueous inkjet ink as described above contains the pigment dispersion described above, and thus has the excellent filter filterability even after being formed into an ink. Therefore, as described above, labor can be saved during the filtration treatment, and the inkjet ink can be provided in consideration of the environment, at low cost.

### [Examples]

Hereinafter, embodiments of the present invention will be described in detail based on Examples.

### (Example 1)

20 parts by weight of a red pigment (1149 Perylene Red, C.I. Pigment Red 149, manufactured by DCL Corporation) as a colored organic pigment, 33.33 parts by weight of a dispersant A described later as a dispersant, 4.00 parts by weight of 1,2-hexanediol (1,2-HD) as an organic solvent, 0.45 parts by weight of a 30 wt% NaOH aqueous solution, and 17.69 parts by weight of pure water were mixed to obtain 75.47 parts by weight of a mixed liquid 1. A concentration of the organic solvent in the mixed liquid 1 is 5.3% by weight. 347 parts by weight of zirconia beads (bead diameter φ: 0.65 mm) were added to the mixed liquid 1, and dispersion treatment was performed at 2,000 rpm for 120 minutes with a sand mill to obtain a dispersing liquid (dispersion step).

24.53 parts by weight of pure water was added to the obtained dispersing liquid to obtain 100.00 parts by weight (zirconia beads are excluded) of a mixed liquid 2. After the mixed liquid 2 was stirred, the zirconia beads were removed to obtain a pigment dispersion in which the red pigment was uniformly dispersed (adjustment step). A concentration of the organic solvent in the pigment dispersion having a final composition is 4.0% by weight.

### (Examples 2 to 17, Comparative Examples 1 to 14)

The dispersion step was performed in the same manner as in Example 1 except that the materials were blended as shown in Tables 1 and 2. Next, a pigment dispersion having a final composition was obtained in the same manner as in Example 1 except that the organic solvent concentration was adjusted to the organic solvent concentrations shown in Tables 1 and 2.

### (Dispersant A)

The dispersant A contains a benzyl acrylate-based copolymer as an active ingredient. This benzyl acrylate-based copolymer is a diblock copolymer composed of a block satisfying benzyl acrylate/acrylic acid/methacrylic acid=34.6/15.3/0.1 (weight ratio) and a block satisfying benzyl acrylate=50 (weight ratio) in terms of a monomer composition ratio. The copolymer had an acid value of 128 mgKOH/g, an amine value of 0 mgKOH/g, and a peak top molecular weight of 8,000. The dispersant A is a polymer aqueous solution composed of the copolymer, sodium hydroxide, and ion-exchanged water, and is adjusted to have a solid content of 27.0% by weight and a pH of 8.2. The dispersant A does not contain an organic solvent.

### (Dispersant B)

The dispersant B contains, as its active ingredient, a benzyl methacrylate-based copolymer polymerized using benzyl methacrylate without using benzyl acrylate. This benzyl methacrylate-based copolymer is a diblock copolymer composed of a block satisfying methyl methacrylate/acrylic acid=61.7/11.1 (weight ratio) and a block satisfying benzyl methacrylate=27.2 (weight ratio) in terms of a monomer composition ratio. The copolymer had an acid value of 93 mgKOH/g, an amine value of 0 mgKOH/g, and a peak top molecular weight of 8,920. The dispersant B is a polymer aqueous solution composed of the copolymer, sodium hydroxide, and ion-exchanged water, and is adjusted to have a solid content of 21.4% by weight and a pH of 8.2. The dispersant B does not contain an organic solvent.

### (Evaluation)

### <Measurement of Average Particle Size>

The average particle size of the particles in the pigment dispersion was measured using a zeta potential/particle size/molecular weight measurement system (ELSZ-2000ZS manufactured by Otsuka Electronics Co., Ltd.).

### < Measurement of Viscosity >

The viscosity of the pigment dispersion was measured at 25°C using an E-type viscometer (TV-22 manufactured by Toki Sangyo Co., Ltd.).

### (Evaluation)

### <Filterability Test>

### <<Preparation of Test Sample A>>

To each of the pigment dispersions obtained in Examples and Comparative Examples, 400 parts by weight of pure water were added so that the pigment concentration corresponding to the ink composition was 4%, and the mixture was stirred to prepare a test sample A in which the colored organic pigment was uniformly dispersed.

### <<Preparation of Test Sample B>>

396 parts by weight of pure water and 4 parts by weight of 1,2-hexanediol were added to the pigment dispersion of Comparative Example 2 so that the pigment concentration corresponding to the ink composition was 4%, and the mixture was stirred to prepare a test sample B in which the red pigment was uniformly dispersed. In the test sample B, whether late addition of the organic solvent is effective during the preparation of the ink composition is confirmed, in comparison with the test sample A using the pigment dispersion of Example 5.

### <<Test>>

A filterability test was performed on each of the obtained test samples A and B by the following method.

A 500 mL sample bottle weighed in advance was allowed to stand in an instrument for a vacuum filtration system (VT-500 manufactured by ADVANTEC CO., LTD.). A filter holder for vacuum filtration (KGS-47 manufactured by ADVANTEC CO., LTD.) equipped with a membrane filter (NNG29325 manufactured by Nihon Pall Ltd., mesh size 1.2 µm) was installed at an upper part of the vacuum filtration system. In a state where suction was performed at a pressure of 0.08 MPa, 500 g of the test sample was charged and filtered. After 3 minutes, the suction was stopped and the pressure was returned to normal pressure, and then the 500 mL sample bottle was taken out and weighed. By calculating the difference in weight before and after the filtration, the weight (filtration amount) of the filtered product passing through the filter per 3 minutes was determined. Evaluation criteria of the filtration amount were as follows: Excellent at 500 g/3 minutes or more, Good at 400 g/3 minutes or more, and Poor at less than 400 g/3 minutes. The evaluation results using the test sample A are shown in Tables 1 and 2. In addition, the result in the case of using the test sample B was 130 g/3 minutes, and the evaluation of filterability was Poor. In the case of 500 g/3 minutes or more, the filtration time (seconds) was recorded and shown in Tables 1 and 2.

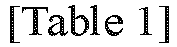

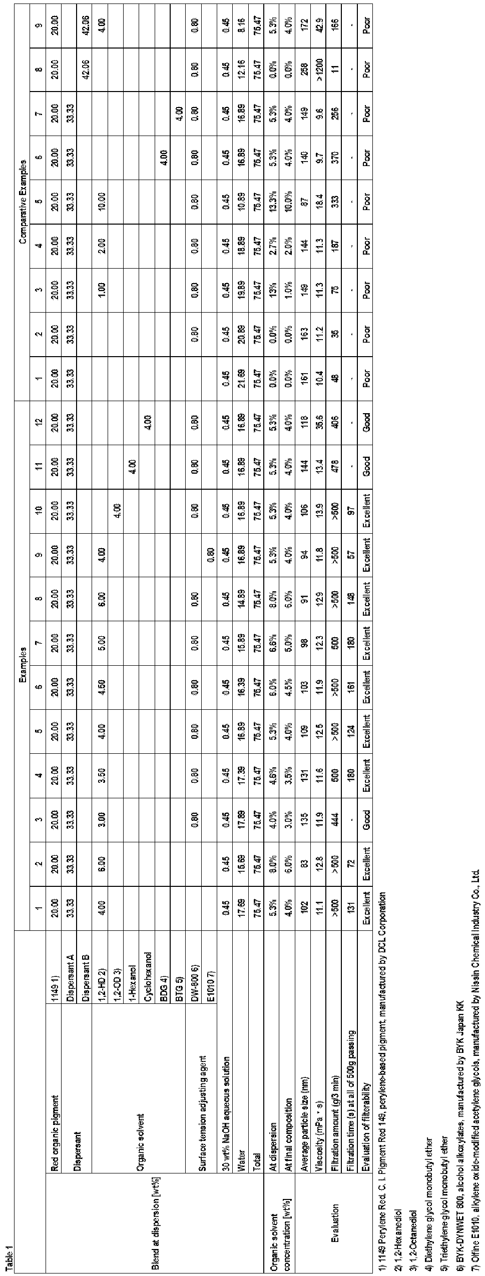

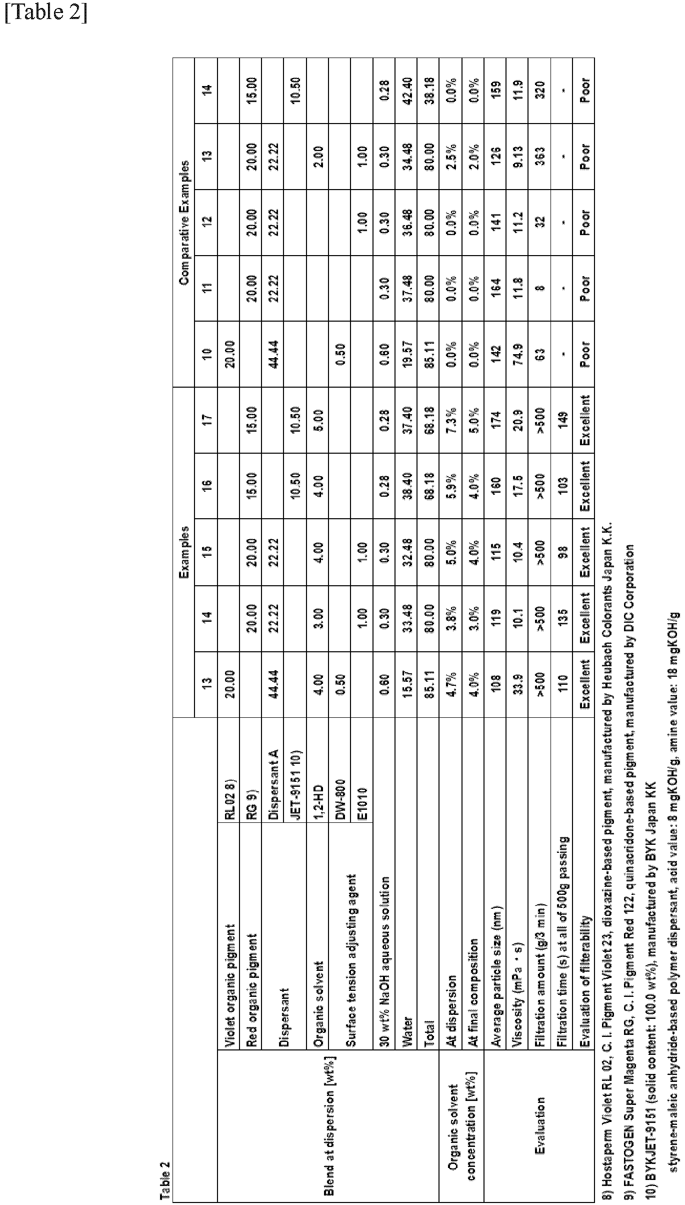

As shown in Tables 1 and 2, it can be seen that the pigment dispersion obtained by using a predetermined dispersant and organic solvent when a colored organic pigment is used as a pigment, containing the organic solvent in a predetermined content ratio range, and performing dispersion treatment passes a filter in a remarkably larger amount than the pigment dispersions of Comparative Examples, and thus is excellent in filter filterability. Furthermore, the result of the test sample B using Comparative Example 2 demonstrates that if the organic solvent is not used at preparation of the pigment dispersion, and the organic solvent is added for the first time at preparation of the ink composition, the filter filterability is remarkably poor as compared with Example 5, and the effect of the organic solvent cannot be obtained.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. An aqueous-inkjet pigment dispersion comprising a colored organic pigment, a dispersant, an organic solvent, and water, wherein
the dispersant is at least one selected from a benzyl acrylate-based polymer dispersant and a styrene-maleic anhydride-based polymer dispersant having an acid value of 15 mgKOH/g or less,
the organic solvent is at least one selected from monohydric aliphatic alcohols and polyhydric aliphatic alcohols, and
a total amount of the organic solvent is 3 to 8% by weight in the entire aqueous-inkjet pigment dispersion.

2. The aqueous-inkjet pigment dispersion according to claim 1, wherein
the aliphatic alcohol has a chain structure having 4 to 10 carbon atoms.

3. The aqueous-inkjet pigment dispersion according to claim 1 or 2, comprising a surface tension adjusting agent.

4. A method for manufacturing the aqueous-inkjet pigment dispersion according to claim 1 or 2, the method comprising:
obtaining a mixed liquid containing a colored organic pigment, a dispersant, an organic solvent, and water, the mixed liquid being adjusted so that a content of the organic solvent in a total amount of the mixed liquid is 3 to 8% by weight, and
dispersing the mixed liquid.

5. An aqueous inkjet ink comprising the aqueous-inkjet pigment dispersion according to claim 1 or 2.

6. The aqueous inkjet ink according to claim 5, wherein
a filtration amount, when the aqueous inkjet ink having a pigment concentration of 4% by weight is filtered through a filtration membrane having a mesh size of 1.2 µm, is 400 g/3 minutes or more.
